Europäisches Patentamt

**European Patent Office**

Office européen des brevets

(11) Veröffentlichungsnummer: **0 037 513**
**B1**

(12) **EUROPÄISCHE PATENTSCHRIFT**

(45) Veröffentlichungstag der Patentschrift:
**08.08.84**

(21) Anmeldenummer: **81102199.7**

(22) Anmeldetag: **24.03.81**

(51) Int. Cl.³: **D 21 B 1/32,** D 21 F 1/70,
B 03 D 1/24, B 01 F 5/04

(54) Flotationsvorrichtung zum Deinken von Faserstoffsuspensionen.

(30) Priorität: **09.04.80 DE 3013655**
**24.04.80 DE 3015788**

(43) Veröffentlichungstag der Anmeldung:
**14.10.81 Patentblatt 81/41**

(45) Bekanntmachung des Hinweises auf die Patenterteilung:
**08.08.84 Patentblatt 84/32**

(84) Benannte Vertragsstaaten:
**BE FR GB IT NL SE**

(56) Entgegenhaltungen:
**DE - A - 2 836 496**
**DE - B - 1 275 513**
**DE - B - 2 914 392**
**US - A - 2 424 654**
**US - A - 2 883 169**
**US - A - 3 309 785**

(73) Patentinhaber: **Feldmühle Aktiengesellschaft,**
**Fritz-Vomfelde-Platz 4, D-4000 Düsseldorf 11 (DE)**
Patentinhaber: **E. + M. Lamort S.A.,**
**F-51302 Vitry-le-François (FR)**

(72) Erfinder: **Barnscheidt, Wolfgang Dr. Dipl.-Ing.**
**Dipl.-Phys., Am alten Schlag,**
**D-4047 Dormagen-Straberg (DE)**

(74) Vertreter: **Uhlmann, Hans, Dr. rer.nat., Dipl.-Chem.,**
**Gladbacher Strasse 189, D-4060 Viersen 1 (DE)**

BUNDESDRUCKEREI BERLIN

## Beschreibung

Die Erfindung betrifft eine Flotationsvorrichtung zum Deinken von Faserstoffsuspensionen, die im wesentlichen aus einer Flotationszelle, insbesondere einer Flotationsringzelle und dieser zugeordneten Injektoren zum Belüften von Faserstoffsuspensionen besteht. Aus der DE-OS 2 836 496 und der DE-AS 2 914 392 sind Flotationsringzellen bekanntgeworden. Bei diesen wird vor dem Eintritt in die eigentliche Flotationszelle die Faserstoffsuspension aus Altpapier in Faserstoffinjektoren mit Luftblasen beladen und in die Ringzelle eingedüst. Die feinen Luftblasen steigen durch die Faserstoffsuspension nach oben. An sie lagern sich Druckerschwärze und andere Verunreinigungen an, die auf der Oberfläche der Faserstoffsuspension eine Schaumschicht bilden. Der mit Verunreinigungen beladene Schaum wird von der Oberfläche mittels Saugdüsen abgesaugt. Die so vorgereinigten Fasern sinken nach unten. Sie werden, ebenfalls in Form einer Suspension, als Gutstoff abgezogen und erneut über Injektoren mit Luft beladen eingedüst.

Aggregate dieser Art weisen einen hohen Wirkungsgrad auf und besitzen eine ausgezeichnete Reinigungswirkung, sind jedoch noch mit zwei Mängeln behaftet. Zum einen erfordern sie eine erhebliche Anzahl von Injektoren, da der Durchmesser dieser Injektoren aus Gründen der Luftbeladung nur sehr gering sein kann. Zum anderen setzen sich die Düsen auf Grund dieser geringen Abmessungen relativ leicht zu. Die zugesetzten Düsen müssen dann ausgebaut und durchgeblasen werden, was zwar keinen sehr großen Aufwand erfordert, wozu jedoch einiges handwerkliches Geschick erforderlich ist. Desweiteren muß eine Person für diese Arbeiten zur Verfügung stehen.

Aufgabe der vorliegenden Erfindung ist, bei gleichartigen Flotationszellen die Zahl der erforderlichen Düsen zu verringern, ohne das die Qualität der Luftbeladung der Faserstoffsuspension darunter leidet, desweiteren die Verstopfungsgefahr der Düsen weitgehend zu beseitigen und die durch Verstopfungen bedingten Wartezeiten zu verringern.

Gelöst wird diese Aufgabe durch eine Flotationsvorrichtung zum Deinken von Faserstoffsuspensionen, die im wesentlichen aus einer Flotationszelle, insbesondere einer Flotationsringzelle und dieser zugeordneten Injektoren zum Belüften von Faserstoffsuspensionen besteht, mit folgenden kennzeichnenden Merkmalen: die Injektoren sind mit Breitschlitzdüsen ausgerüstet, der Querschnitt der Breitschlitzdüsen weist ein Verhältnis Querschnitt zu Umfang zwischen 1,5 mm und 4,0 mm auf, jeder Breitschlitzdüse ist an ihrem engsten Bereich eine Mischkammer zur Zumischung von Luft zur Faserstoffsuspension nachgeschaltet, in die Mischkammer münden Belüftungsbohrungen ein, der Querschnitt der Mischkammer beträgt das 1,2 bis 1,7fache des Querschnitts der Breitschlitzdüse.

Die zu reinigende Faserstoffsuspension besteht aus Altpapier, das chemisch und physikalisch bereits so weit aufgeschlossen worden ist, daß die Suspension keine groben Verunreinigungen mehr enthält und in die einzelnen Fasern, aus denen das Papier bestand, zerlegt wurde. An diesen Fasern haftet jedoch, im wesentlichen in Form von Pigmenten, der zu entfernende Farbstoff.

Die Faserlänge entspricht den üblichen Längen der Papierfasern, d. h., sie liegt unter 6 mm, im wesentlichen zwischen 3 und 0,5 mm.

Besteht bei Runddüsen die Gefahr, daß sich noch nicht völlig voneinander gelöste Faserbündel im engsten Düsenquerschnitt zusammenballen und so die Düse verstopfen, so ist diese Gefahr bei Flachdüsen, die eine wesentlich größere Breitenausdehnung besitzen, weitgehend vermieden. Die Flachdüse weist zwar eine Schlitzweite auf, die geringer ist als der Durchmesser der Runddüse, erstreckt sich dafür aber um ein Vielfaches in der Breite, so daß praktisch stets mit einem Durchspülen etwaiger Faserbündel gerechnet werden kann.

Von erheblicher Bedeutung ist das Verhältnis von Querschnitt zu Umfang des Düsenaustrittes, das zwischen 1,5 mm und 4,0 mm, vorzugsweise zwischen 2,0 mm und 2,5 mm liegt. An diesen engsten Querschnitt der Düse schließt sich in Form einer Stufe ein erweiterter Querschnitt, der Mischkammerquerschnitt an, der 1,2 bis 1,7mal größer ist als der engste Querschnitt. Zweckmäßig beträgt der Querschnitt der Mischkammer das 1,3- bis 1,4fache des engsten Querschnitts. Durch die Wahl des Verhältnisses zwischen Querschnittsfläche und Umfang ist festgelegt, welche Oberfläche des aus der Düse austretenden Faserstoffsuspensionsstrahls mit Luft in Berührung kommt. Durch die Wahl des Luftansaugquerschnitts, also der Größe der Stufe, ist die zur Verfügung stehende Luftmenge festgelegt. Da der Injektor wie eine Wasserstrahlpumpe arbeitet, entsteht im Luftansaugquerschnitt ein Unterdruck, der durch die Verbindungsbohrung zur atmosphärischen Luft ausgeglichen wird. Die dadurch angesaugte Luft vermischt sich mit der Faserstoffsuspension auf dem weiteren Weg durch den Injektor, wobei die Größe der Stufe, d. h. das Verhältnis von engstem Querschnitt der Düse zum Mischkammerquerschnitt nicht nur die zugeführte Luftmenge, sondern gleichzeitig in Verbindung mit dem Druck der durchströmenden Faserstoffsuspension die Größe der Luftblasen bestimmt, die im Injektor gebildet werden.

Eine zweckmäßige Ausgestaltung der Erfindung sieht vor, daß die Summe der Querschnitte aller Belüftungsbohrungen das 1,1- bis 1,4fache des Luftansaugquerschnitts der Mischkammer ist. Unter Luftansaugquerschnitt ist dabei die Größe zu verstehen, die durch Subtraktion des engsten Düsenquerschnitts vom Mischkammerquerschnitt sich ergibt. Die Querschnittssumme, die zweckmäßig zwischen 1,2 und 1,4 liegt, gewährleistet, daß auch bei Reibungsverlusten genügend Luft dem Luftansaugquerschnitt zugeführt werden kann und daß selbst beim Zusetzen einzelner Belüftungsbohrungen noch die erforderliche Luftmenge zur Verfügung steht.

Die Belüftungsbohrungen sind zweckmäßig unter einem Winkel von 30 bis 60° gegenüber der Strömungsrichtung eingebracht, d. h. daß der Winkel, gesehen in Strömungsrichtung, 30 bis 60° beträgt, wodurch eine weitgehend tangentiale Luftzufuhr zur durchströmenden Faserstoffsuspension und damit eine gute Luftverteilung in der Mischkammer gewährleistet ist.

Eine besonders bevorzugte weitere Ausgestaltung der Erfindung besteht darin, die Breitschlitzdüse, die Einmündung der Belüftungsbohrungen in die Mischkammer und zumindest einen Teilbereich der Mischkammer innerhalb eines in dem Injektor gelagerten Einsatzes anzuordnen.

Bei Faserstoffsuspensionen besteht immer die Gefahr, daß sich einzelne Fasern aneinander anlagern und die so gebildeten Faserbündel die Düse verstopfen. Um diese Verstopfungen zu beseitigen, ist im allgemeinen der Ausbau des Injektors erforderlich, d. h. daß dieser zwischen zwei Ventilen angeordnet sein muß, die ein Absperren der Faserstoffsuspensionszufuhr auf der einen Seite und ein Austreten von Faserstoffsuspension aus dem Flotationsbehälter auf der anderen Seite verhindern. Die Unterbringung der für die Belüftung funktionswesentlichen Teile in einem gesonderten Einsatz hat den Vorteil, daß damit ohne Ausbau die Faserstoffsuspensionen abgesperrt und die Düsen und Zuleitungen gereinigt werden können.

Der Einsatz kann dabei als prismatische Säule ausgeführt sein, die im Gehäuse des Injektors verschoben wird, wobei der Arbeitsbereich dieser Säule die Einspritzdüse, einen Teil des Mischraumes sowie die Luftansaugöffnungen enthält, so daß durch einfaches Einschieben des aus dem Gehäuse des Injektors hervorstehenden Säulenteils, der keine Ausnehmungen enthält, die Verbindung von der Düsenzuleitung zum Flotationsgefäß unterbrochen wird. Gleichzeitig wird dabei der die Ausnehmungen aufweisende Bereich der Säule aus dem Injektor hinausgeschoben und kann so ohne jede Schwierigkeit von außen gereinigt werden.

Eine besonders bevorzugte Ausbildung besteht darin, den Einsatz als drehbaren Zylinder oder Kegelstumpf auszuführen. Durch diese Anordnung ist es möglich, durch einfaches Drehen des Einsatzes die Verbindung von Faserstoffsuspensionszuleitung zum Flotationsbehälter zu unterbrechen und die Düse in eine Position zu bringen, in der sie durch Ausnehmungen im Gehäuse gereinigt werden kann. Der Einsatz hat damit die gleiche Funktion wie ein Hahnküken in einem Absperrhahn, d. h. die Unterbrechung des Suspensionsstromes. Er ermöglicht aber gleichzeitig nach dem Drehvorgang den Zugang zur Düse, die dann mit Druckluft oder Druckwasser gereinigt werden kann. Sowohl bei der Ausführung als prismatische Säule, also als Schieber als auch bei der Ausführung als Zylinder, bzw. kegelstumpfförmiger Einsatz, ergibt sich der Vorteil, daß der Einbau von separaten Ventilen vor und hinter dem Injektor entfallen kann. Ferner entfällt der Ausbau des Injektors zu Reinigungszwecken, es genügt vielmehr eine einfache Drehbewegung oder ein Einschieben, um die Düse freizulegen und gleichzeitig den Strom der Faserstoffsuspension zu unterbrechen.

Aus Gründen der Abdichtung wird die kegelige Form des Einsatzes bevorzugt. Durch diese Form ist es möglich, bei Verschleiß, ähnlich wie bei einem Hahnküken, nachzustellen und erneut die Dichtigkeit gegenüber dem Gehäuse zu gewährleisten.

Eine weitere Ausgestaltung der Erfindung sieht vor, daß die konvergierende Düsenzuleitung und der Diffusor Teil des Gehäuses sind. Selbstverständlich ist es möglich, den gesamten Injektor als Einsatz auszuführen, also z. B. in ein sogenanntes Hahnküken einzubetten. Dabei ergeben sich jedoch erhebliche Ausmaße, die eine wirtschaftliche Fertigung nicht gestatten. Sinnvoller Weise wird deshalb nur der Bereich in dem Einsatz angeordnet, der gegebenenfalls verstopfen kann und dessen Reinigung von außen vorgenommen werden muß.

Das Gehäuse des Injektors ist dazu mit Öffnungen zur Reinigung der Einspritzdüse versehen, durch die zweckmäßig auch die Luftansaugbohrungen gereinigt werden können. Durch Drehung der Säule in eine Richtung wird die Mischkammer mit einer Reinigungs-, d. h. Blasöffnung verbunden. Gleichzeitig erfolgt die Verbindung des Diffusoransatzes mit der Auslaßöffnung und die Verbindung der Einmündung der Luftansaugbohrungen mit weiteren Auslaßöffnungen. Die Faserstoffzuleitung wird dabei gleichzeitig unterbrochen, ebenso wie die Verbindung zur Flotationszelle geschlossen wird. In dieser Stellung kann die Düse durch Druckluft oder Druckwasser freigespült werden. Ebenfalls kann eine mechanische Reinigung durch Durchführung eines Drahtes, Holzstückes usw. erfolgen.

Gemäß einer bevorzugten Ausgestaltung der Erfindung ist das Gehäuse mit Anschlägen für die Arbeits- und Reinigungsstellung des Einsatzes versehen. Durch diese Anschläge wird vermieden, daß der Einsatz bei der Schiebebewegung, d. h. wenn er als prismatische Säule ausgeführt ist, versehentlich ganz aus der Ausnehmung entfernt wird. Bei der Ausführung des Einsatzes als Zylinder, bzw. als Kegelstumpf, dienen die Anschläge der Begrenzung der Schwenkbewegung. Dadurch ist gewährleistet, daß nicht versehentlich eine Luftansaugbohrung mit der Faserstoffzuleitung oder der Flotationskammer verbunden wird und dadurch Faserstoffsuspension in den Düsenbereich zusätzlich eintritt, bzw. über diese Bohrungen ausgepreßt wird.

Gemäß einer zweckmäßigen Ausgestaltung der Erfindung ist das Gehäuse mit einer Verriegelung für den Einsatz versehen, so daß der Einsatz in Arbeitsstellung verriegelt werden kann. Diese Verriegelung ist wichtig, da durch sie eine unbeabsichtigte Bewegung während des Eindüsens der Faserstoffsuspension vermieden wird, d. h. also, auch kleine Bewegungen verhindert werden, durch die die Kanten des Diffusors in den Flüssigkeitsstrom eintauchen, dadurch zur Wirbelbildung führen, wobei gleichzeitig die Bohrungen des Einsatzes nicht mehr mit den Gehäusebohrungen fluchten, so daß es zu einer verminderten Luftansaugung kommt.

Die Erfindung wird nachstehend anhand der Zeichnungen beschrieben.

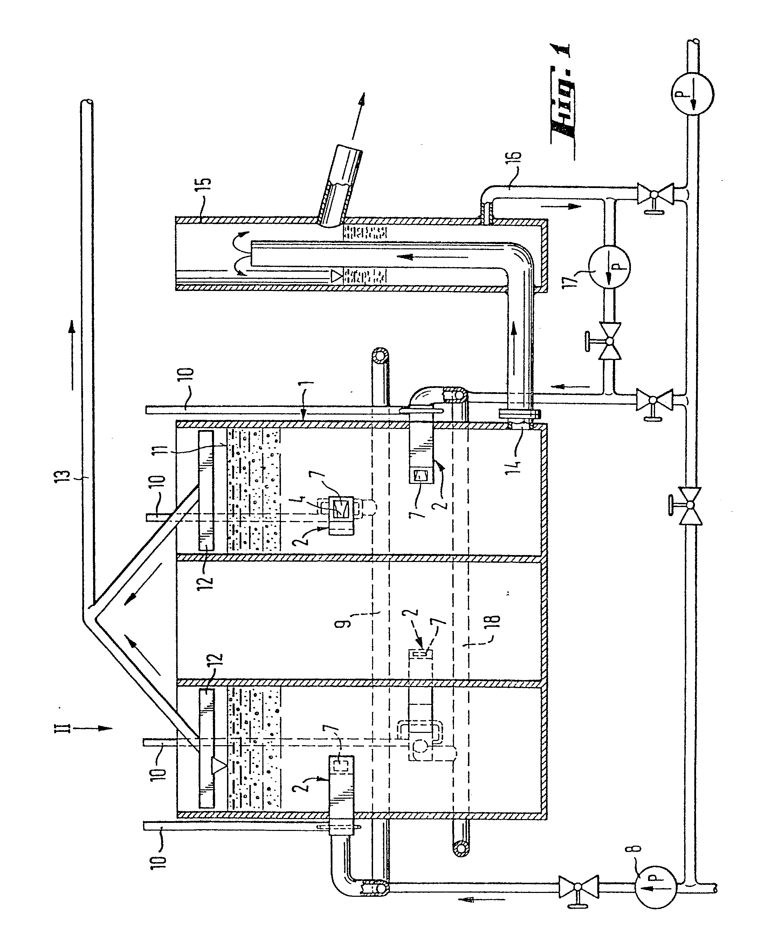

Fig. 1 zeigt eine Deinkinganlage im Schnitt,

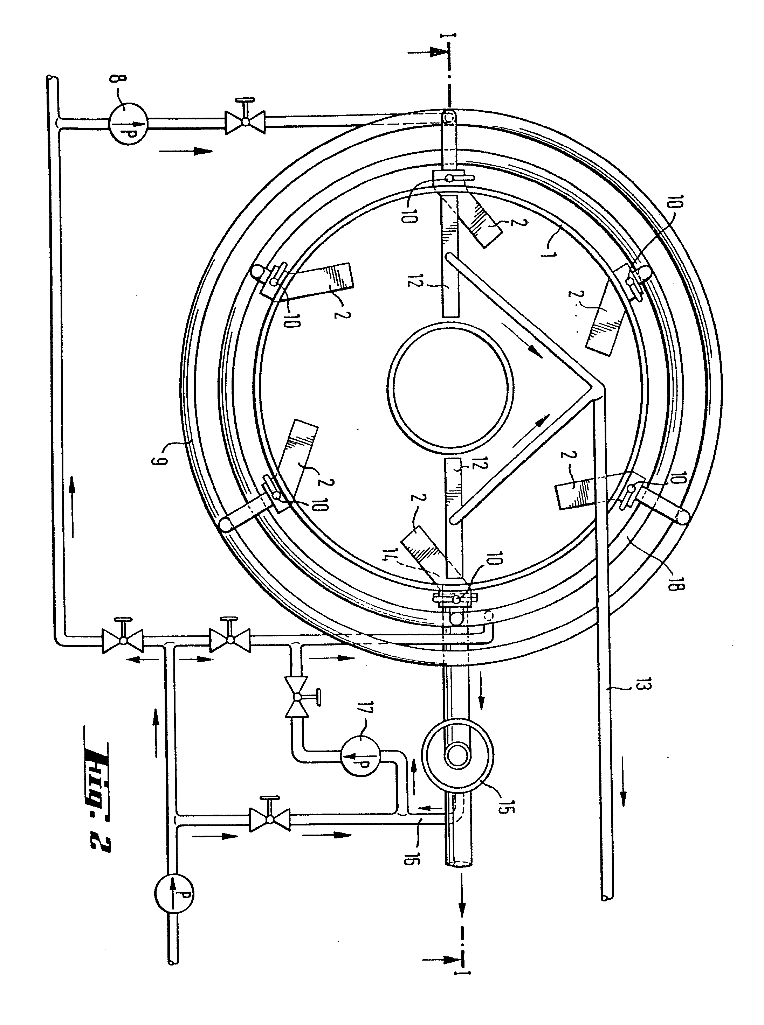

Fig. 2 die gleiche Anlage in der Draufsicht,

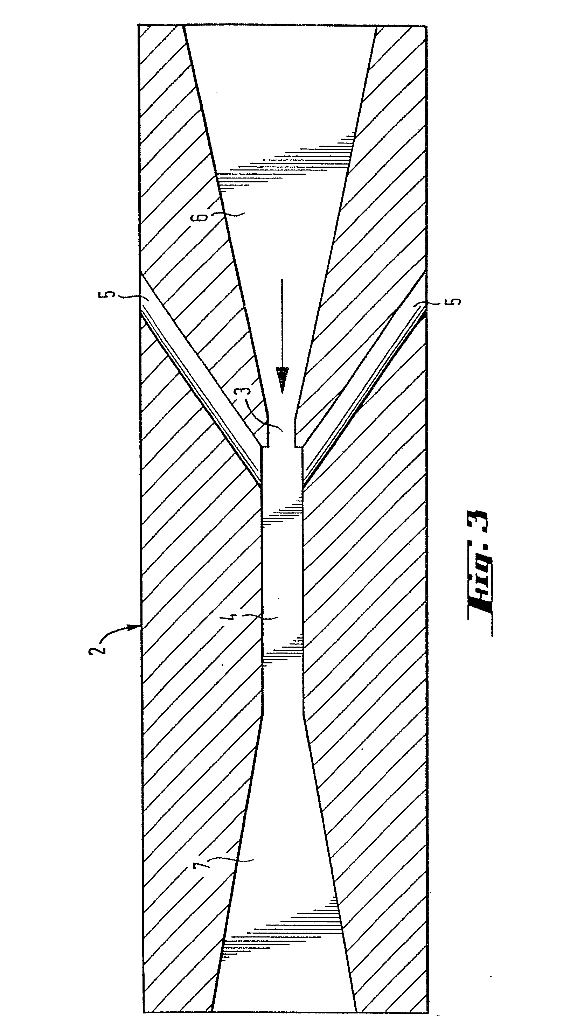

Fig. 3 einen Schnitt durch den Injektor,

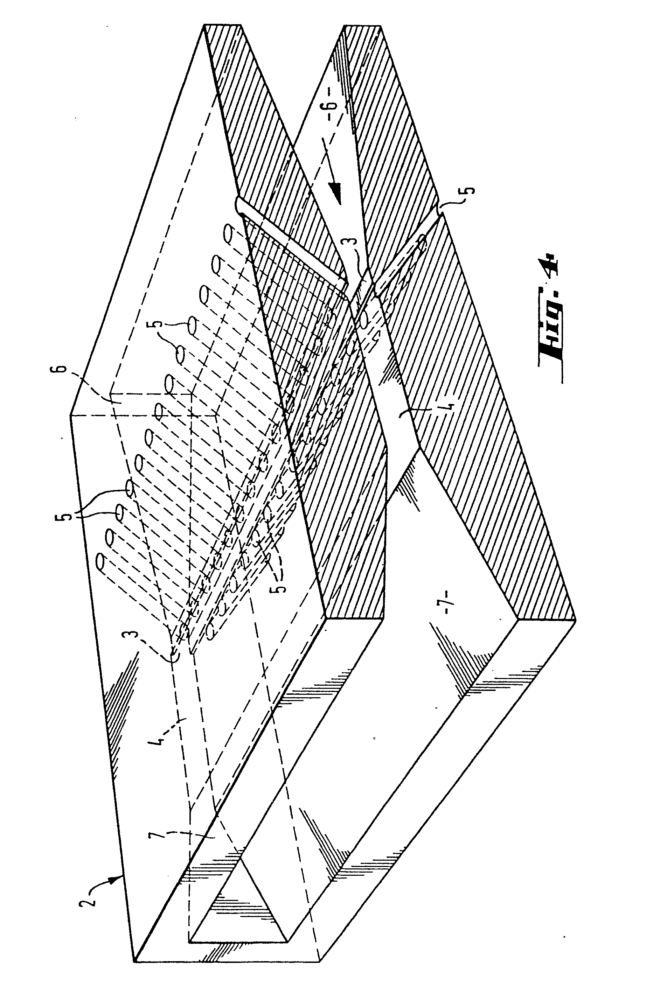

Fig. 4 einen Schnitt durch einen perspektivisch dargestellten Injektor,

Fig. 5 einen Schnitt durch einen Injektor mit drehbarem Einsatz in Arbeitsstellung,

Fig. 6 einen Schnitt durch den gleichen Injektor in Reinigungsstellung.

Über eine Pumpe 8 wird der Ringleitung 9 Faserstoffsuspension zugeführt. An der Ringleitung 9 sind verteilt über den Umfang der Flotationszelle 1 Injektoren 2 angeordnet, die Breitschlitzdüsen 3 aufweisen. Angeschlossen an die Injektoren 2 sind Belüftungsleitungen 10, die über die Höhe des Flüssigkeitsniveaus 11 der Zelle 1 hinausragen. Über diese Belüftungsleitungen 10 wird durch den Injektor 2 Luft angesaugt, die zusammen mit der Faserstoffsuspension in die Flotationszelle gelangt. Hier steigt sie in Form von Luftblasen durch die Faserstoffsuspension nach oben auf und schwimmt als schmutziger Schaum auf dem Flüssigkeitsniveau 11. Dieser Schaum wird durch Saugdüsen 12 über die Absaugleitung 13 abgezogen, niedergeschlagen und abgeführt. Der gereinigte Stoff tritt über die Abzugsöffnung 14 aus und gelangt in die Überlaufkammer 15. Aus dieser wird eine Teilmenge der Faserstoffsuspension über die Zirkulationsleitung 16 abgezogen und mittels der Kreislaufpumpe 17 der inneren Ringleitung 18 zugeführt. An dieser inneren Ringleitung 18 sind ebenso wie an der Ringleitung 9 Injektoren 2 angeschlossen, die mit Belüftungsleitungen 10 verbunden sind. Die bereits vorgereinigte Faserstoffsuspension wird in diesen Injektoren erneut mit Luft beladen, die dann, ebenso wie vorher, die Flotationszelle 1 in Form von Luftperlen durchkämmt.

Die Injektoren 2 sind als Breitschlitzinjektoren ausgeführt. Die Düsenzuleitung 6 besitzt Keilform und mündet in die Breitschlitzdüse 3, an die sich die Mischkammer 4 anschließt. In die Mischkammer 4 erstrecken sich Belüftungsbohrungen 5, die mit der Belüftungsleitung 10 verbunden sind. Der Diffusor 7 ist mit der Wand der Flotationszelle 1 verbunden und ragt in diese hinein. Die Injektoren 2 sind dabei so über den gesamten Umfang der Flotationszelle 1 verteilt, daß die gesamte Fläche bestrichen wird, d. h. sie sind unter unterschiedlichen Winkeln angeordnet, so daß zum Bestreichen der vollen Ringbreite drei Injektoren von 75 mm Düsenweite erforderlich sind. Sie weisen eine Düsenhöhe von 5 mm auf.

Damit beträgt der Querschnitt $5 \times 75$ mm $= 375$ mm$^2$, der Umfang $2 \times (75 + 5)$ $= 160$ mm und das Verhältnis Querschnitt zu Umfang $375 : 160 = 2{,}2$ mm.

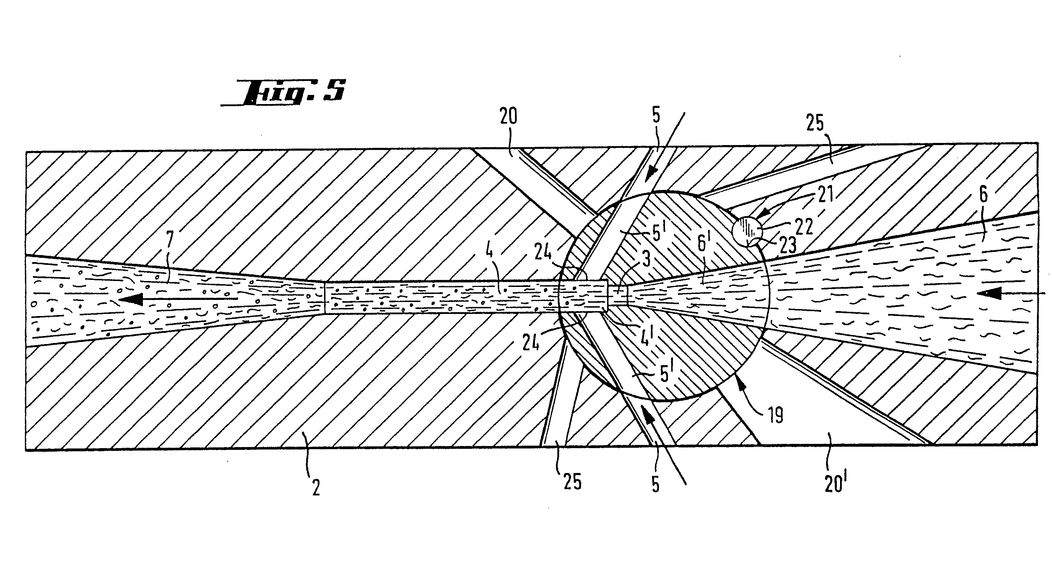

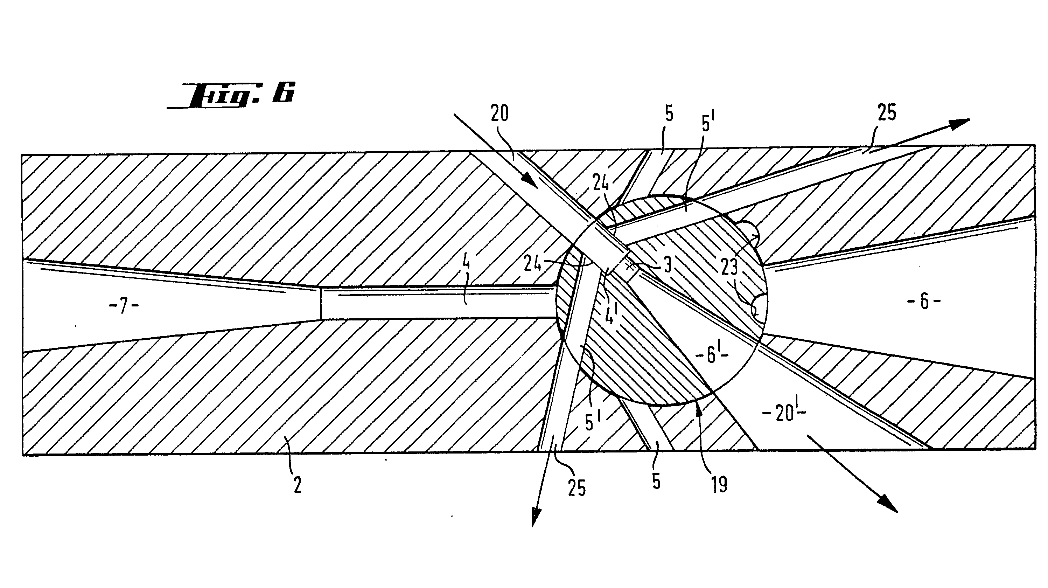

In der Ausführung gemäß Fig. 5 und 6 ist im Gehäuse des Injektors 2 der Einsatz 19 angeordnet, der als Kegelstumpf ausgeführt ist. In Arbeitsstellung gemäß Fig. 5 tritt die zu belüftende Faserstoffsuspension durch die Düsenzuleitung 6 in den Injektor 2 ein. Die Düsenzuleitung 6 verjüngt sich in Richtung der Breitschlitzdüse 3, wobei sich der Düsenzuleitungsabschnitt 6' innerhalb des Einsatzes 19 befindet. Von der Ober- und Unterseite des Gehäuses des Injektors 2 erstrecken sich Belüftungsbohrungen 5 durch das Gehäuse des Injektors 2, setzen sich innerhalb des Einsatzes 19 als Belüftungsbohrungen 5' fort und treffen dort auf die Mischkammer 4, die im Bereich des Einsatzes 19 den Mischkammeransatz 4' bildet. Durch den Eintritt der Belüftungsbohrungen 5' in den Mischkammeransatz 4' ergeben sich die Einmündungen 24 der Belüftungsbohrungen 5, 5'. Der Diffusor 7 schließt sich an die Mischkammer 4 an und wird mit der nicht dargestellten Flotationszelle verbunden. Die Verriegelung 21 besteht aus einem Paßstift 22, der sich in einer sich parallel zur Mantelfläche des Einsatzes 19 erstreckenden Arretierbohrung 23 befindet.

Die Fig. 6 zeigt den Injektor 2 mit einem Einsatz 19, der um ca. 40° gegenüber der Arbeitsstellung gedreht ist. Die Belüftungsbohrungen 5 sind ebenso wie die Mischkammer 4 und die Düsenzuleitung 6 durch den Einsatz 19 abgesperrt. Der Mischkammeransatz 4' ist im Eingriff mit der Reinigungsöffnung 20, der Düsenzuleitungsabschnitt 6' mit der Reinigungsöffnung 20' verbunden. Die Bohrungen 5' fluchten mit den Ausblasöffnungen 25. Durch Beaufschlagung der Reinigungsöffnung 20 mit Druckwasser oder Druckluft wird diese gleichzeitig durch die Ausblasöffnungen 25 und nach Passieren der Breitschlitzdüse 3 entgegen der Laufrichtung der Faserstoffsuspension durch die Reinigungsöffnung 20' geleitet. Dadurch wird in dem Bereich festsitzendes Fasermaterial fortgespült und die Breitschlitzdüse 3 damit wieder frei für den weiteren Arbeitseinsatz.

## Patentansprüche

1. Flotationsvorrichtung zum Deinken von Faserstoffsuspensionen, im wesentlichen bestehend aus einer Flotationszelle, insbesondere Flotationsringzelle und dieser zugeordneten, nach dem Prinzip der Wasserstrahlpumpe arbeitenden Injektoren, denen als Treibmittel die zu belüftende Faserstoffsuspension unter Druck zugeführt wird, gekennzeichnet durch folgende Merkmale:

die Injektoren (2) sind mit Breitschlitzdüsen (3) ausgerüstet,

der Querschnitt der Breitschlitzdüsen (3) weist ein Verhältnis von Querschnitt zu Umfang zwischen 1,5 und 4,0 mm auf,
jeder Breitschlitzdüse (3) ist an ihrem engsten Bereich eine Mischkammer zur Zumischung von Luft zur Faserstoffsuspension nachgeschaltet,
in die Mischkammer (4) münden Lüftungsbohrungen (5) ein,
der Querschnitt der Mischkammer (4) beträgt das 1,2- bis 1,7fache des Querschnitts der Breitschlitzdüse (3).

2. Flotationsvorrichtung nach Anspruch 1, dadurch gekennzeichnet, daß der Injektor (2) mit Belüftungsbohrungen (5) versehen ist, deren Querschnittssumme das 1,1- bis 1,4fache des Luftansaugquerschnitts der Mischkammer (4) beträgt.

3. Flotationsvorrichtung nach einem der Ansprüche 1 bis 2, dadurch gekennzeichnet, daß die Belüftungsbohrungen (5) unter einem Winkel von ca. 30 bis 60° gegenüber der Strömungsrichtung angeordnet sind.

4. Flotationsvorrichtung nach einem der Ansprüche 1 bis 3, dadurch gekennzeichnet, daß die Breitschlitzdüse (3), die Einmündung (24) der Belüftungsbohrungen (5) und zumindest ein Teilbereich (4') der Mischkammer (4) innerhalb eines in dem Injektor (2) gelagerten Einsatzes (19) angeordnet sind.

5. Flotationsvorrichtung nach einem der Ansprüche 1 bis 4, dadurch gekennzeichnet, daß der Einsatz (19) als drehbar gelagerter Zylinder oder Kegelstumpf ausgeführt ist.

6. Flotationsvorrichtung nach einem der Ansprüche 1 bis 5, dadurch gekennzeichnet, daß das Gehäuse des Injektors (2) mit Reinigungsöffnungen (20, 20') zur Reinigung der Breitschlitzdüse (3) und der Belüftungsbohrungen (5, 5') versehen ist.

7. Flotationsvorrichtung nach einem der Ansprüche 1 bis 6, dadurch gekennzeichnet, daß das Gehäuse des Injektors (2) mit Anschlägen für Arbeits- und Reinigungsstellung des Einsatzes (19) versehen ist.

8. Flotationsvorrichtung nach einem der Ansprüche 1 bis 7, dadurch gekennzeichnet, daß das Gehäuse des Injektors (2) mit einer Verriegelung (21) für die Arbeitsstellung des Einsatzes (19) versehen ist.

## Claims

1. Flotation apparatus for de-inking fibrous suspensions, substantially comprising a flotation cell, especially an annular flotation cell, and injectors associated therewith, operating on the principle of the water-jet pump, to which injectors the fibrous suspension to be aerated is supplied under pressure as a propellant, characterised by the following features:
the injectors (2) are equipped with fishtail nozzles (3),
the cross-section of the fishtail nozzles (3) has a ratio of cross-sectional area to circumference of between 1,5 and 4,0 mm,
downstream of the narrowest region of each fishtail nozzle (3) is arranged a mixing chamber (4) for admixing air with the fibrous suspension,
ventilation bores (5) lead into the mixing chamber (4),
the cross-section of the mixing chamber (4) is from 1,2 to 1,7 times the cross-section of the fishtail nozzle (3).

2. Flotation apparatus according to claim 1, characterised in that the injector (2) is provided with ventilation bores (5) the total cross-section of which is from 1,1 to 1,4 times the cross-section of the air intake of the mixing chamber (4).

3. Flotation apparatus according to claim 1 or 2, characterised in that the ventilating bores (5) are at an angle of approximately from 30 to 60° with respect to the direction of flow.

4. Flotation apparatus according to any one of claims 1 to 3, characterised in that the fishtail nozzle (3), the mouth (24) of the ventilation bores (5) and at least part (4') of the mixing chamber (4) are arranged inside an insert (19) mounted in the injector (2).

5. Flotation apparatus according to any one of claims 1 to 4, characterised in that the insert (19) is constructed as a rotatably mounted cylinder or truncated cone.

6. Flotation apparatus according to any one of claims 1 to 5, characterised in that the housing of the injector (2) is provided with cleaning openings (20, 20') for cleaning the fishtail nozzle (3) and the ventilating bores (5, 5').

7. Flotation apparatus according to any one of claims 1 to 6, characterised in that the housing of the injector (2) is provided with stops for the operating and cleaning positions of the insert (19).

8. Flotation apparatus according to any one of claims 1 to 7, characterised in that the housing of the injector (2) is provided with a lock (21) for the operating position of the insert (19).

## Revendications

1. Dispositif de flottation pour le désencrage de suspensions de matière fibreuse, se composant principalement d'une cellule de flottation, en particulier une cellule annulaire de flottation et d'injecteurs qui lui sont adjoints et qui fonctionnent selon le principe de la pompe à jet d'eau, auxquels est amenée, sous pression, comme agent moteur, la suspension de matière fibreuse à aérer, caractérisé par le fait que:
les injecteurs (2) sont équipés de tuyères plates (3);
la section transversale des tuyères plates (3) présente un rapport de la section transversale au périmètre compris entre 1,5 et 4,0 mm;
chaque tuyère plate (3) est suivie, à sa zone la plus étroite, d'une chambre de mélange pour le mélange de l'air à la suspension de matière fibreuse;
dans la chambre de mélange (4) débouchent des perçages d'aération (5);
la section transversale de la chambre de mélange (4) représente 1,2 à 1,7 fois la section transversale de la tuyère plate (3).

2. Dispositif de flottation selon la revendication 1, caractérisé en ce que l'injecteur (2) est pourvu de perçages d'aération (5) dont la somme des sections transversales représente 1,1 à 1,4 fois la section transversale d'aspiration de l'air de la chambre de mélange (4).

3. Dispositif de flottation selon l'une quelconque des revendications 1 ou 2, caractérisé en ce que les perçages d'aération (5) sont disposés en formant un angle d'environ 30 à 60° par rapport à la direction d'écoulement.

4. Dispositif de flottation selon l'une quelconque des revendications 1 à 3, caractérisé en ce que la tuyère plate (3), le débouché (4) des perçages d'aération (5) et au moins une partie (4') de la chambre de mélange (4) se trouve à l'intérieur d'une pièce d'insertion (19) montée dans l'injecteur (2).

5. Dispositif de flottation selon l'une quelconque des revendications 1 à 4, caractérisé en ce que la pièce d'insertion (19) a la forme d'un cylindre ou d'un tronc de cône monté rotatif.

6. Dispositif de flottation selon l'une quelconque des revendications 1 à 5, caractérisé en ce que le boîtier de l'injecteur (2) est pourvu d'ouvertures de nettoyage (20, 20') pour le nettoyage de la tuyère plate (3) et des perçages d'aération (5, 5').

7. Dispositif de flottation selon l'une quelconque des revendications 1 à 6, caractérisé en ce que le boîtier de l'injecteur (2) est pourvu de butées pour les positions de travail et de nettoyage de la pièce d'insertion (19).

8. Dispositif de flottation selon l'une quelconque des revendications 1 à 7, caractérisé en ce que le boîtier de l'injecteur (2) est pourvu d'un verrouillage (21) de la position de travail de la pièce d'insertion (19).

Fig. 1

0 037 513

Fig. 2

**Fig. 3**

0 037 513

0 037 513

Fig. 4

Fig. 5

**Fig. 6**